# EUROPEAN PATENT APPLICATION

(11) **EP 4 572 187 A1**
(43) Date of publication of application: **18.06.2025**
(21) Application number: 23215824.6
(22) Date of filing: 12.12.2023
(51) Int. Cl.: H04B 10/70, H04L 9/08

(54) **INTEGRATED QUANTUM KEY DISTRIBUTION TRANSMITTER**

(71) Applicant: ID Quantique S.A., 1227 Genève (CH)
(72) Inventor: BOSO, Gianluca, 1213 Petit-Lancy (CH)
(74) Representative: Feira, Edoardo

(57) **Abstract**

The present invention relates to a transmitter (1000) for a BB84 protocol, comprising a laser (1100) configured to generate a first light pulse (P₁) having a first duration (Tₚ₁), a modulator (1200) configured to modulate an intensity of the first light pulse (P₁) so as to obtain a second light pulse (P₂) having a second duration (T_{P2}) smaller than the first duration (T_{P1}) and/or a third light pulse (P₃) having a third duration (T_{P3}) smaller than the first duration (T_{P1}). Further embodiments relate to methods for operating the transmitter (1000).

## Description

The present invention relates to a quantum key distribution transmitter which can be implemented with a reduced number of components.

### State of the art

Quantum cryptography or quantum key distribution, in the following also referred to as QKD, is a method allowing the distribution of a secret key between two distant parties, the transmitter and the receiver, with a provable security. This secret key can be used by the two parties to, for example, encrypt the transmission of a useful payload, by performing some kind of symmetric encryption.

Quantum key distribution relies on quantum physics principles by encoding information in quantum states, or qubits, as opposed to classical communication's use of bits. Usually, photons are used for these quantum states and a transmission channel, called quantum channel, for instance an optical fiber, is used to transfer photons between the two parties.

Different properties of a photon can be used for the encoding, like arrival time, polarization, and phase. All have their advantages and drawbacks depending on the physical layer of the transmission channel and the type of QKD protocol.

One of the most well-known protocols for QKD is the so-called BB84 protocol, based on four distinct quantum states.

There exist several ways to implement the BB84 protocol, depending on the encoding scheme of the two non-orthogonal bases and on the presence or not of decoy states, an additional modulation of the photons used to improve security.

More specifically, in the BB84 time-bin/phase protocol, the transmitter must perform the following steps:
I. Generate two pulses that are coherent and with the same phase but that show a random phase with respect to the other couples of pulses. These two pulses are identified as early and late time-bins.
II. Randomly chose between two encoding bases: time-bin (Z base) or phase (X base).
III. In case of Z base: Suppress one of the two pulses to encode the information in the time-bin.
IV. In case of X base: Keep both pulses, half their intensity to have the same total number of photons of the Z base, vary the phase between them (choosing from two possible values, e.g. 0 and 180 degrees) to encode the information on the phase.
V. Randomly choose between a finite set of intensities (typically 2 or 3) for the encoded pulses to implement the decoy strategy.

Other encoding schemes (e.g. polarization or phase), can be described by simply adapting some steps of the above protocol to the specific implementation. Furthermore, the different steps can be implemented using differing strategies to deal with, for example, the generation of phase-randomized pulses or with the modulation of the intensity of the generated states.

Recent years have seen an increase in the demand for a compact and low-cost QKD system. It is therefore important to find a solution that can be efficiently implemented in an integrated platform, such as a photonic integrated circuit, that can overcome the shortcomings of the current state of the art. Currently known implementation, however, make use of components which are difficult, or not possible, to implement in an integrated manner.

### Summary of the invention

The present invention is generically based on the concept that shorter pulses can be carved from a longer single pulse by using modulators. This results in pulses which are phase-coherent. Moreover, by using further longer pulses, other shorter pulses can be obtained which are similarly phase-coherent between them, but not with respect to other short pulses carved from other longer pulses. By appropriately modulating the shorter pulses, BB84 transmission can then be obtained in the Z or X base, without the need for complex equipment.

An embodiment of the invention can relate to a transmitter for a BB84 protocol, comprising a laser configured to generate a first light pulse having a first duration, a modulator configured to modulate an intensity of the first light pulse so as to obtain a second light pulse having a second duration smaller than the first duration and/or a third light pulse having a third duration smaller than the first duration.

In some embodiments the laser can be configured to generate a fourth light pulse having a fourth duration, the modulator can be configured to modulate an intensity of the fourth light pulse so as to obtain a fifth light pulse having a fifth duration smaller than the fourth duration and/or a sixth light pulse having a sixth duration smaller than the fourth duration.

In some embodiments the laser can be configured to be turned off between the first light pulse and the fourth light pulse.

In some embodiments the first light pulse and the fourth light pulse can be phase-randomized with respect to each other.

In some embodiments the second light pulse and the third light pulse can have the same phase.

In some embodiments the transmitter can further comprise a controller configured to synchronize operation of the laser and of the modulator.

In some embodiments the modulator can be configured to modulate the intensity of the first light pulse so as to obtain the second light pulse or the third light pulse depending on a value of a signal to be transmitted.

In some embodiments the modulator can comprise a first intensity modulator and a second intensity modulator, the first intensity modulator can be configured to modulate the intensity of the first light pulse so as to obtain the second light pulse and the third light pulse, the second intensity modulator can be configured to suppress one of the second light pulse and the third light pulse depending on a value of a signal to be transmitted.

In some embodiments the modulator can be configured to introduce a phase difference between the second light pulse and the third light pulse depending on a value of a signal to be transmitted.

In some embodiments the modulator can comprise a first intensity modulator and a phase modulator, the first intensity modulator can be configured to modulate the intensity of the first light pulse so as to obtain the second light pulse and the third light pulse, the phase modulator can be configured to introduce the phase difference.

In some embodiments the modulator can be configured to modulate the intensity of the second light pulse and/or of the third light pulse depending on a decoy value to be applied to a signal to be transmitted.

In some embodiments the modulator can comprise a first intensity modulator and a third intensity modulator, the first intensity modulator can be configured to modulate the intensity of the first light pulse so as to obtain the second light pulse and the third light pulse, the third intensity modulator can be configured to modulate the intensity one of the second light pulse and/or of the third light pulse depending on a decoy value to be applied to a signal to be transmitted.

In some embodiments the transmitter can further comprise a variable optical attenuator configured to modulate the intensity of the second light pulse and/or of the third light pulse so as to output a predetermined number of photons per pulse.

In some embodiments the modulator can be implemented in a single photonic integrated circuit.

In some embodiments the first duration can be larger than 500ps and/or smaller than 100ns.

In some embodiments the second duration and/or third duration can be larger than 50ps and/or smaller than 50ns, preferably larger than 10ps and/or smaller than 5ns.

In some embodiments the laser can be a distributed-feedback laser, or a continuous wave laser
A further embodiment of the invention can relate to a method for operating a transmitter for a BB84 protocol, the method comprising the steps of: generating a first light pulse having a first duration with a laser, modulating an intensity of the first light pulse with a modulator so as to obtain a second light pulse having a second duration smaller than the first duration and/or a third light pulse having a third duration smaller than the first duration.

In some embodiments the method can further comprise the steps of:
determining whether the transmitter can be operating in X or Z base,
if it can be determined that the transmitter can be operating in the Z base:
   suppressing one of the second light pulse and the third light pulse depending on a value of a signal to be transmitted.
if it can be determined that the transmitter can be operating in the X base:
   phase modulating the second light pulse and/or the third light pulse depending on a value of a signal to be transmitted.

In some embodiments the method can further comprise the steps of:
if it can be determined that the transmitter can be operating in the X base:
halving the intensity of the second light pulse and the third light pulse.

In some embodiments the method can further comprise the steps of:
determining whether a decoy can be to be applied,
if it can be determined that the decoy can be to be applied:
   applying the decoy to the second light pulse and/or the third light pulse depending on a value of the decoy to be applied, and
   transmitting the second light pulse and/or the third light pulse,

if it can be determined that the decoy can be not to be applied:
transmitting the second light pulse and/or the third light pulse.

### Brief description of the figures

Figure 1 schematically illustrates a BB84 transmitter 1000;
Figure 2 schematically illustrates a possible implementation of modulator 1200 in form of modulator 2200;
Figure 3 schematically illustrates a possible implementation of modulator 1200 in form of modulator 3200;
Figure 4 schematically illustrates a possible implementation of modulator 1200 in form of modulator 4200;
Figure 5 schematically illustrates a BB84 transmitter 2000,
Figure 6 schematically illustrates a method 3000 for operating a BB84 transmitter.

### Detailed description of preferred embodiments

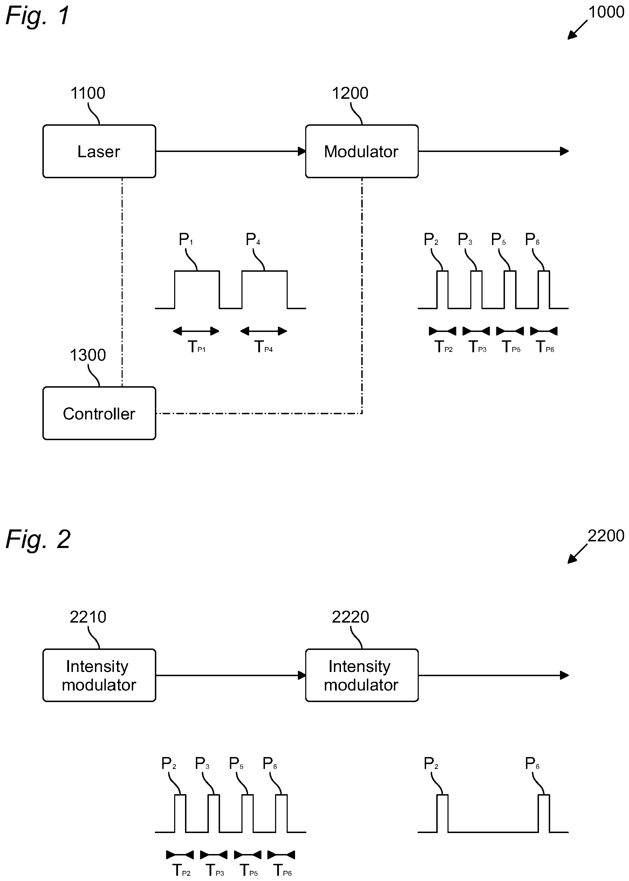

Figure 1 schematically illustrates a BB84 transmitter 1000. As can be seen in figure 1, the transmitter 1000 comprises a laser 1100 and a modulator 1200. The illustrated controller 1300, which will be described later, is thus understood as being optional.

The laser 1100 is configured to generate a first light pulse P₁ having a first duration T_{P1}. The modulator 1200 is configured to modulate an intensity of the first light pulse P₁ so as to obtain a second light pulse P₂ having a second duration T_{P2} smaller than the first duration T_{P1} and/or a third light pulse P₃ having a third duration T_{P3} smaller than the first duration T_{P1}.

In some preferred embodiments, the first duration T_{P1} is larger than 500ps and/or smaller than 100ns. Alternatively, or in addition, the second duration T_{P2} and/or third duration T_{P2} is larger than 50ps and/or smaller than 50ns, preferably larger than 10ps and/or smaller than 5ns.

By using the modulator 1200, it is therefore possible to carve one or more short light pulses P₂, P₃, preferably two shorter pulses, from a longer pulse P₁. Thus, preferably, the combined duration of two short light pulses P₂, P₃ and the time in between them is shorter than, or equal to, the duration of a longer pulse P₁.

Thanks to this approach, it is advantageously possible to obtain one or more short light pulses P₂, P₃, preferably two shorter pulses, containing photons which are coherent as they belong to the same longer pulse P₁ and with a narrow and constant spectral emission.

The modulator 1200 preferably is, or comprises, an intensity modulator, capable of reducing the value of the first light pulse P₁ to zero, or to a value which is interpreted as zero by a receiver receiving signals from the transmitter 1000. The modulator can in particular reduce the value of the light for a time period starting at the beginning of the first light pulse P₁, or at the end of the first one of the one or more short light pulses P₂, P₃ and/or ending at the end of the first light pulse P₁ and/or at the beginning of the last one of the one or more short light pulses P₂, P₃. In this manner, the carving out of the one or more short light pulses P₂, P₃ from the first light pulse P₁ can be achieved with a simple intensity modulator.

The use of modulator 1200 to carve the pulses allows to easily change the characteristics of the pulses, such as their frequency, and/or pulse duration, and/or spacing between the one or more short light pulses P₂, P₃. All of those parameters are more challenging to be changed with a gain switched laser. Moreover, with this solution, no interferometer is needed for generating the one or more short light pulses P₂, P₃. This is particularly advantageous as interferometers are difficult to integrate in a photonic chip and require a tight control of temperature and fabrication process to have the desired performance.

In preferred embodiments, the first one of the one or more short light pulses P₂, P₃ can start at the same starting time of the first light pulse P₁. Alternatively, or in addition, the last one of the one or more short light pulses P₂, P₃ can end at the same ending time of the first light pulse P₁. In this manner, the operation of the modulator can be limited to the interval in between the one or more short light pulses P₂, P₃, however the invention is not limited thereto.

As illustrated in figure 1, the laser 1100 can be further configured to generate a fourth light pulse P₄ having a fourth duration T_{P4}, in a manner similar to the generation of the first light pulse P₁. Moreover, the modulator 1200 can be configured to modulate an intensity of the fourth light pulse P₄ so as to obtain a fifth light pulse P₅ having a fifth duration T_{P5} smaller than the fourth duration T_{P4} and/or a sixth light pulse P₆ having a sixth duration T_{P6} smaller than the fourth duration T_{P4}, in a manner similar to the second light pulse P₂ and the third light pulse P₃. That is, a plurality of long light pulses, P₁, P₄, etc. can be generated, and the carving of shorter light pulses from respective long light pulses can be repeated, so as to generate any number of shorter light pulses, as needed for the transmitter 1000.

In this manner, only one laser is employed so that implementation of the transmitter in photonics circuits comprising only one integrated laser is possible. It will be clear to those skilled in the art that the laser 1100 can, however, also be implemented as an external component to the photonic circuit, which can then comprise the modulator 1200 and, where applicable, the controller 1300.

In preferred embodiments the laser 1100 can be configured to be turned off between the first light pulse P₁ and the fourth light pulse P₄. Generally, in the presence of a plurality of long light pulses, the laser 1100 can be turned off in between neighboring pulses.

This is particularly advantageous because, by turning the laser off, two neighboring long light pulses, such as the first light pulse P₁ and the fourth light pulse P₄, are phase-randomized because the laser generating them is turned on and off between pulses. That is, the photons in the first light pulse P₁ are phase-randomized with respect to the photons in the fourth light pulse P₄. Phase randomization can thus be implemented by simply turning on and off the source laser in between adjacent pulses, which allows the use of an interferometer and/or an active phase-randomization circuit to be avoided. That is, no active phase-randomization circuit is needed, so that there is no need for a high-throughput randomness generator dedicated to this task and/or analog driver to drive the phase modulator.

On the other hand, since the second light pulse P₂ and the third light pulse P₃ have been generated without turning the laser 1100 off, they have the same phase. That is, the photons in the second light pulse P₂ have the same phase of the photons in the third light pulse P₃.

It has thus been described how, with a simple implementation which can be easily integrated in a photonic circuit and does not rely on complex photonic devices, it is possible to create a plurality of groups of one or more short light pulses, for instance the group P₂ and P₃, followed by the group P₅ and P₆, starting from a respective plurality of long light pulse, each group of short light pulses being obtained from a single long light pulse. This allows the one or more short light pulses in each group to be phase-coherent among them, while short light pulses in different groups are phase-randomized.

In some embodiments, as visible in figure 1, the transmitter 1000 can further comprise a controller 1300 configure to synchronize operation of the laser 1100 and of the modulator 1200. The synchronization can in particular allow the time-synchronization of the laser and of the modulator, so that the modulator 1200 can be operated in the same time base of the laser, thus ensuring the correct generation of the short light pulses from the respective long light pulse.

Thus, in preferred embodiments, the controller can set a common time signal which is provided to both the laser 1100 and the modulator 1200. Alternatively, or in addition, the controller can provide signals directly driving the laser 1100 and the modulator 1200 to achieve the desired output at the output of the modulator 1200.

In preferred embodiments, the modulator 1200 is configured to modulate the intensity of the first light pulse P₁ so as to obtain the second light pulse P₂ or the third light pulse P₃ depending on a value of a signal to be transmitted. It will be clear to those skilled in the art that the signal to be transmitted can generally be seen as a digital 1 or 0, and the association of the signal to be transmitted to the transmission of the second light pulse P₂ or the third light pulse P₃ can be dependent on the configuration of the system. The possibility to select one among the second light pulse P₂ or the third light pulse P₃ and suppress the other one allows the transmitter to implement a BB84 Z base encoding by simply using a single modulator 1200 and, preferably, an on-off single-level modulator as modulator 1200.

Figure 2 schematically illustrates a possible implementation of modulator 1200 in form of modulator 2200.

As visible in figure 2, the modulator 2200 comprises a first intensity modulator 2210 and a second intensity modulator 2220. In this manner, the first intensity modulator 2210 can be configured to modulate the intensity of the first light pulse P₁, or similarly of the fourth first light pulse P₁, or more in general of one of the long light pulses, so as to obtain the second light pulse P₂ and the third light pulse P₃, or the respective short light pulses, as previously described. That is, the first intensity modulator 2210 can operate as described for the modulator 1200 in relation to the description of figure 1. The second intensity modulator 2220 can be configured to suppress one of the second light pulse P₂ and the third light pulse P₃ depending on a value of a signal to be transmitted.

For instance, in the embodiment illustrated in figure 2, the first modulator outputs short light pulses P₂, P₃, P₅ and P₆, respectively from P₁ and P₄, as previously described. Out of those, the second modulator suppresses P₃ and P₅, thus transmitting, using a BB84 Z base, one digital value with the first group of short light pulse and the opposite digital value with the second group of short light pulses.

It will be clear to those skilled in the art that, as previously described, this operation can be obtained by using only the first intensity modulator 2210, which therefore can, in some embodiment, implement modulator 1200.

Nevertheless, in some embodiments, it might be preferable to employ two on-off single-level modulators 2210, 2220, as this allows each modulator to take on a single task. Namely, one modulator can carve two short light pulses from the long light pulses, and the other modulator can suppress one of the two short light pulses depending on the value to be transmitted. This can, in some cases, simplify the driving of the two modulators, as opposed to having a single modulator taking case of both modulations.

In some further embodiments, at least one, and preferably only one, of the two intensity modulators can be a multi-level modulator, instead of a single level on-off modulator. This advantageously allows the implementation of a BB84 protocol with decoys, in which the short light pulses are not only transmitted or not, but can be transmitted with different amplitudes.

It will be clear that the multi-level modulator can be implemented at any of intensity modulators 2210, 2220. If implemented at the intensity modulator 2210, then this modulator will be responsible for carving out the short light pulses and deciding the presence and, if applicable, value of the decoy, in a manner per se known, by modulating the amplitude of one or both pulses to one of the various decoy levels. If implemented at the intensity modulator 2220, then this modulator will be responsible for encoding the digital value to be transmitted by suppressing one of the light pulses deciding the presence and, if applicable, value of the decoy, in a manner per se known, by modulating the amplitude of the remaining pulses to one of the various decoy levels.

It will however be clear that even further implementations are possible. For instance, the intensity modulator 2210 can be a multi-level modulator and can be used to modulate the intensity of the long light pulse to a desired decoy level, while the intensity modulator 2220 can be used to carve the pulse corresponding to the digital value to be transmitted. Still further, one modulator can carve out only one single short light pulse, depending on the value to be transmitted, while the other modulator can perform a multi-level intensity modulation, either to the long light pulse or to the short one.

One advantage of implementing the modulator 2200 with two separate modulators instead of a single one and implementing the modulator carving out the one or more short light pulses from the long light pulse as an on-off modulator, while the other modulator is implemented as a multi-level intensity modulator, is that the multi-level intensity modulator does not need to be fast enough perform the carving of the short light pulses. As it will be clear, the modulation speed required for the carving out of the short light pulses is higher than for the elimination of one pulse, or for the multi-level decoy modulation of one pulse, be it a long or short one. This is particularly advantageous as on-off, single-level, modulators are known to be faster than multi-level modulators, so that avoiding to request the fastest operation, namely the carving of the one or more short light pulses, from the multi-level intensity modulator allow more relaxed specifications on this component, reducing costs.

While in the description above reference has been made to examples in which the transmitter 1000 employs a Z base transmission, the present invention is not limited thereto and the alternative, per se known, X base BB84 transmission can be used instead.

In this case, the modulator 1200 is configured to introduce a phase difference between the second light pulse P₂ and the third light pulse P₃, or similarly between the fifth light pulse P₅ and the sixth light pulse P₆, or more in general between any two short light pulses carved from a single long light pulse, depending on a value of a signal to be transmitted.

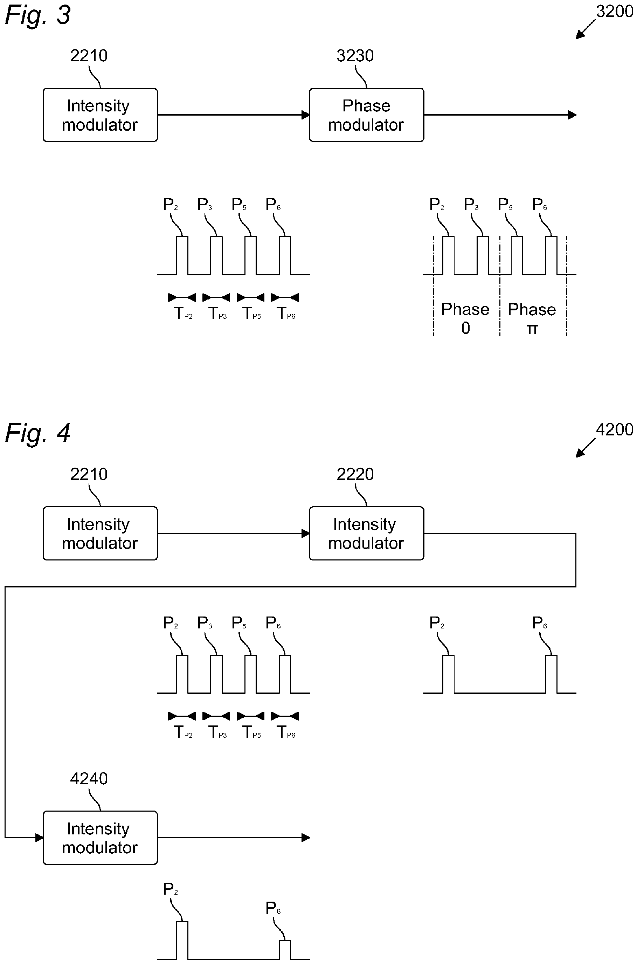

It will be clear to those skilled in the art that various manners can be implemented for obtaining a modulator capable of both carving out two short light pulses from a long one, and for introducing a phase difference between them. Figure 3 schematically illustrates a possible implementation of modulator 1200 in form of modulator 3200 which achieves this operation.

In particular, as visible in figure 3, the modulator 3200 comprises a first intensity modulator 2210 and a phase modulator 3230. The first intensity modulator 2210 is configured to modulate the intensity of the first light pulse P₁ so as to obtain the short light pulses P₂, P₃, P₅ and P₆, etc., respectively from P₁, P₄, etc. as previously described. For each group of short light pulses, a group being the two short light pulses derived from a single long light pulse, the phase modulator 3230 is configured to introduce, or not, a phase difference between them, depending on the value to be encoded.

For instance, as visible in figure 3, the first group comprised of pulses P₂, P₃, is encoded to transmit a first digital value which is associated to the lack of phase difference between the pulses, so that phase modulator 3230 does not introduce a phase difference between P₂ and P₃. On the other hand, the second group comprised of pulses P₅, P₆, is encoded to transmit a second digital value, opposite to the first digital value, which is associated to the presence of a phase difference between the pulses, so that phase modulator 3230 introduces a phase difference between P₅ and P₆, preferably a phase difference of π.

Both in the case of a X or Z base transmission, it will be possible to introduce decoys, in a manner similar to what has already been discussed for the embodiment of figure 2.

In general, this can be achieved, in particular, by configuring the modulator 1200 to modulate the intensity of the second light pulse P₂ and/or of the third light pulse P₃ depending on a decoy value to be applied to a signal to be transmitted. Various possible implementations for doing so by using one or two intensity modulators have been described above, in particular with reference to the description of figure 2. It will be clear that, while those have been discussed in the context of a Z base, they can also be implemented for an X base. Thus, for instance, the multi-level modulation necessary for implementing the decoy could be implemented at the intensity modulator 2210, which could then both carve the short light pulses and implement the decoy, as previously described.

The previously described implementations rely on the presence of one or two intensity modulators for implementing the modulator 1200. It will be clear that the invention is not limited thereto. In particular, figure 4 schematically illustrates a possible implementation of modulator 1200 in form of modulator 4200, which comprises three intensity modulators 2210, 2220, previously described, and 4240.

In the example illustrated in figure 4, the three intensity modulators are directed to three modulations performed in the Z base so that the intensity modulator 2210 is configured only for carving out the short light pulses from the long ones, the intensity modulator 2220 is configured only for suppressing one of the two short light pulses depending on a value to be transmitted, and the intensity modulator 4240 is configured only for introducing a decoy level, by multi-level decoding the amplitude of the light pulses. As will be clear to those skilled in the art, in this implementation the intensity modulator 4240 is not necessarily placed after the intensity modulators 2210, 2220 and can, alternatively, be placed before the intensity modulator 2210 or between intensity modulators 2210, 2220.

One advantage of this configuration is that only one intensity modulator requires to be multi-level, namely intensity modulator 4240, while the remaining intensity modulators can be on-off single-level modulators. It will be further be clear that embodiments are possible in which the intensity modulator 4240 is implemented through a plurality of single level intensity modulators, having different modulation levels. For instance when implementing two decoy levels, one at a first value of, as an example, 75% of the total amplitude and one at a second value of, as an example, 50% of the total amplitude, the intensity modulator 4240 can be implemented by a single-level intensity modulator which modulates the input amplitude by the first value of 75%, and by a single-level intensity modulator which modulates the input amplitude by the second value of 50%. By appropriately operating those single-level intensity modulators, the amplitude of the input signal can be modulated by the first value of by the second value, resulting, effectively, in a multi-level modulation.

While the embodiments of figure 4 is illustrated for implementing a Z base transmission, those skilled in the art will readily recognize that an intensity modular 4240 for performing a decoy operation can also be implemented in the X base transmission configuration illustrated in figure 3, and in particular at any point of the modulation chain.

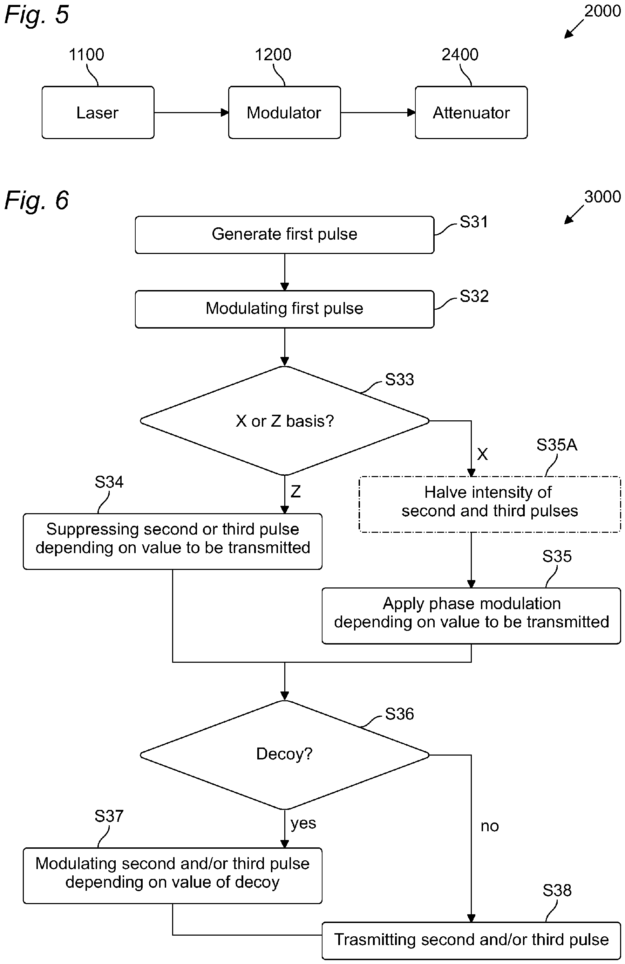

Figure 5 schematically illustrates a BB84 transmitter 2000. As visible in figure 5, transmitter 2000 differs from transmitter 1000 due to the presence of a variable optical attenuator 2400 which is configured to modulate the intensity of the second light pulse P₂ and/or of the third light pulse P₃, or similarly of any pf the previously described short light pulses, so as to output a predetermined number of photons per pulse.

In particular, the standard BB84 protocol works with either true single-photons generated by a single-photon source or with strongly attenuated laser pulses, as can be generated by laser 1100. In this case, the output of the transmitter is usually attenuated to a level that, on average across the short light pulses, each short light pulse contains less than one photon.

This can be implemented by measuring the average power, or amplitude, or number of photons, of a plurality of short pulses before the attenuator 2400, calculating the attenuation needed to arrive at X photons per pulse, applying the corresponding attenuation to obtain an average of X photons per pulse. The value of X can be chosen by the user according to the specific security needs, configuration of the system etc. In preferred embodiments, X is equal to or higher than 0.01 and/or equal to or smaller than 1.

It is noted that the attenuation performed by attenuator 2400 can also be implemented by any of the previously described modulators. However, the inventors have found that, in practice, this leads to strict technical requirements on the modulator, and that implementing the attenuation as described with a separate attenuator results in a simpler configuration.

While the attenuator 2000 is illustrated at the end of the signal processing chain of the transmitter 2000, and in particular after the modulator 1200, it will be clear that the attenuator can be placed at any position of the transmission chain after laser 1100. One advantage of implementing the attenuator 2000 at the end of the chain, as illustrated, is that it protects the transmitter 2000 from possible external attacks.

As previously indicated, the invention is particularly advantageous as it allows the transmitter to be implemented in a simple and effective manner, and in particular by implementing a plurality of components on a single circuit. Thus, in preferred embodiments, any of the described modulators 1200, 2200, 3200, 42000 is a single photonic integrated circuit. Preferably, in some embodiments, the attenuator 2400 can also be implemented in the single photonic integrated circuit. In this manner, costs and space can both be reduced. Moreover, the control of the light within the single photonic integrated circuit can be more reliable than compared to implementation using discrete components.

In the description above, the laser 1100 has not been specifically limited in terms of technology and it will be clear to those skilled in the art that any laser having an output compatible with the BB84 protocol can be implemented. Preferably, in some embodiments, the laser 1100 can be a distributed-feedback laser, or a continuous wave laser. One advantage of both those implementations is that the laser is inherently narrow band, so that there is no need for a filter to limit an otherwise broad emission spectrum. This is particularly advantageous since those filters are difficult to integrate, are subject to important process to process variations and require a fine tuning of the temperature to be spectrally aligned with the input laser.

Figure 6 schematically illustrates a method 3000 for operating a BB84 transmitter.

As can be seen in figure 6, the method 3000 for operating a transmitter 1000, 2000 for a BB84 protocol, the method 3000 comprises a step S31 of generating a first light pulse P₁ having a first duration T_{P1} with a laser 1100, followed by a step S32 of modulating S32 an intensity of the first light pulse P₁ with a modulator, for instance any of modulators 1200, 2200, 3200, 4200, or any of the intensity modulators described above, so as to obtain a second light pulse P₂ having a second duration T_{P2} smaller than the first duration T_{P1} and/or a third light pulse P₃ having a third duration T_{P3} smaller than the first duration T_{P1}. This carving out of shorter light pulses from longer light pulses can be repeated, as previously described, a plurality of time.

At a step S33, it is determined whether the transmitter is operating in X or Z base. If it is determined that the transmitter is operating in the Z base, the method 3000 proceeds with a step S34 of suppressing one of the second light pulse P₂ and the third light pulse P₃ depending on a value of a signal to be transmitted. On the other hand, if it is determined that that the transmitter is operating in the X base, the method 3000 proceeds with a step S35 of phase modulating the second light pulse P₂ and/or the third light pulse P₃ depending on a value of a signal to be transmitted.

Optionally, if it is determined that the transmitter is operating in the X base the method can comprise a step S35A of halving the intensity of the second light pulse P₂ and the third light pulse P₃. This is particularly advantageous as it allows the same intensity to be used at the laser source 1100 for both modes X and Y However, since the X base requires half of the intensity of the Z base, the use of a single laser can be maintained, provided that the intensity in the X base is halved at some point after step S33, not necessarily as illustrated before step S35. The halving operation can be implemented by any of the intensity modulators described above.

Optionally, as previously described, the emitter can also implement one or more decoy levels. This is reflected in method 3000 by the step S36 of determining whether a decoy is to be applied. If it is determined that the decoy is to be applied, at a step S37, the decoy is applied to the second light pulse P₂ and/or the third light pulse P₃ depending on a value of the decoy to be applied and depending on which of the pulses P₂ and/or P₃ is being transmitted. This is followed by a step S38 of transmitting the second light pulse P₂ and/or the third light pulse P₃. On the other hand, if it is determined that the decoy is not to be applied, the method moves forward to step S38 of transmitting the second light pulse P₂ and/or the third light pulse P₃.

Although in method 3000 the decoy application is performed on the short light pulses after they have been carved out of the longer pulse and after they have been encoded according to the base and digital signal to be transmitted, as previously described, the decoy can in principle be applied at any part of the processing chain, so that it will be clear to those skilled in the art that step S36 and S37 can be applied at any point after step S31, and in particular prior to the carving out of the short light pulses at step S32 and/or prior to the modulation at steps S33-S35.

Those skilled in the art will appreciate that the steps above described with reference to the second light pulse P₂ and/or the third light pulse P₃ can be similarly implemented for any other couple of short light pulses carved from a single long light pulse, such as, for instance, fifth light pulse P₅ and/or sixth light pulse P₆.

While the embodiments above have been described and illustrated with a plurality in each embodiment, not all of those features need to be necessarily implemented together for the mere fact that they have been described, or illustrated, together. To the contrary, it will be clear to the skilled person that any of the features described above can be implemented in combination with any other feature described above, even if described in different embodiments.

### List of reference numerals

1000: transmitter
1100: laser
1200: modulator
1300: controller
2200: modulator
2210, 2220: intensity modulator
3200: modulator
3230: phase modulator
4200: modulator
4240: intensity modulator
2000: transmitter
2400: variable optical attenuator
3000: operating method
S31: generating first pulse
S32: modulating first pulse
S33: determining base type
S34: suppressing second or third pulse
S35: phase modulating second and third pulse
S35A: halving intensity of second and third pulse
S36: determining decoy
S37: applying decoy
S38: transmitting pulses

## Claims

1. A transmitter (1000, 2000) for a BB84 protocol, comprising
a laser (1100) configured to generate a first light pulse (P₁) having a first duration (T_{P1}),
a modulator (1200, 2200, 3200, 4200) configured to modulate an intensity of the first light pulse (P₁) so as to obtain a second light pulse (P₂) having a second duration (T_{P2}) smaller than the first duration (T_{P1}) and/or a third light pulse (P₃) having a third duration (T_{P3}) smaller than the first duration (T_{P1}).

2. The transmitter (1000, 2000) according to claim 1, wherein
the laser (1100) is configured to generate a fourth light pulse (P₄) having a fourth duration (T_{P4}),
the modulator (1200, 2200, 3200, 4200) is configured to modulate an intensity of the fourth light pulse (P₄) so as to obtain a fifth light pulse (P₅) having a fifth duration (T_{P5}) smaller than the fourth duration (T_{P4}) and/or a sixth light pulse (P₆) having a sixth duration (T_{P6}) smaller than the fourth duration (T_{P4}),
the laser (1100) is configured to be turned off between the first light pulse (P₁) and the fourth light pulse (P₄),
the first light pulse (P₁) and the fourth light pulse (P₄) are phase-randomized with respect to each other.

3. The transmitter (1000, 2000) according to any previous claim, wherein
the second light pulse (P₂) and the third light pulse (P₃) have the same phase.

4. The transmitter (1000, 2000) according to any previous claim, further comprising
a controller (1300) configured to synchronize operation of the laser (1100) and of the modulator (1200, 2200, 3200, 4200).

5. The transmitter (1000, 2000) according to any previous claim, wherein
the modulator (1200, 2200) is configured to modulate the intensity of the first light pulse (P₁) so as to obtain the second light pulse (P₂) or the third light pulse (P₃) depending on a value of a signal to be transmitted.

6. The transmitter (1000, 2000) according to any previous claim, wherein
the modulator (2200) comprises a first intensity modulator (2210) and a second intensity modulator (2220),
the first intensity modulator (2210) is configured to modulate the intensity of the first light pulse (P₁) so as to obtain the second light pulse (P₂) and the third light pulse (P₃),
the second intensity modulator (2220) is configured to suppress one of the second light pulse (P₂) and the third light pulse (P₃) depending on a value of a signal to be transmitted.

7. The transmitter (1000, 2000) according to any of claims 1 to 4, wherein
the modulator (1200, 3200) is configured to introduce a phase difference between the second light pulse (P₂) and the third light pulse (P₃) depending on a value of a signal to be transmitted,
the modulator (3200) comprises a first intensity modulator (2210) and a phase modulator (3230),
the first intensity modulator (2210) is configured to modulate the intensity of the first light pulse (P₁) so as to obtain the second light pulse (P₂) and the third light pulse (P₃),
the phase modulator (3230) is configured to introduce the phase difference.

8. The transmitter (1000, 2000) according to any previous claim, wherein
the modulator (1200, 4200) is configured to modulate the intensity of the second light pulse (P₂) and/or of the third light pulse (P₃) depending on a decoy value to be applied to a signal to be transmitted,
the modulator (4200) comprises a first intensity modulator (2210) and a third intensity modulator (4240),
the first intensity modulator (2210) is configured to modulate the intensity of the first light pulse (P₁) so as to obtain the second light pulse (P₂) and the third light pulse (P₃),
the third intensity modulator (4240) is configured to modulate the intensity one of the second light pulse (P₂) and/or of the third light pulse (P₃) depending on a decoy value to be applied to a signal to be transmitted.

9. The transmitter (2000) according to any previous claim, further comprising
a variable optical attenuator (2400) configured to modulate the intensity of the second light pulse (P₂) and/or of the third light pulse (P₃) so as to output a predetermined number of photons per pulse.

10. The transmitter (1000, 2000) according to any previous claim, wherein
the modulator (1200, 2200, 3200, 4200) is implemented in a single photonic integrated circuit.

11. The transmitter (1000, 2000) according to any previous claim, wherein
the first duration (T_{P1}) is larger than 500ps and/or smaller than 100ns, and/or
the second duration (T_{P2}) and/or third duration (T_{P2}) is larger than 50ps and/or smaller than 50ns, preferably larger than 10ps and/or smaller than 5ns.

12. The transmitter (1000, 2000) according to any previous claim, wherein the laser (1100) is a distributed-feedback laser, or a continuous wave laser

13. A method (3000) for operating a transmitter (1000, 2000) for a BB84 protocol, the method (3000) comprising the steps of:
generating (S31) a first light pulse (P₁) having a first duration (T_{P1}) with a laser (1100),
modulating (S32) an intensity of the first light pulse (P₁) with a modulator (1200, 2200, 3200, 4200) so as to obtain a second light pulse (P₂) having a second duration (T_{P2}) smaller than the first duration (T_{P1}) and/or a third light pulse (P₃) having a third duration (T_{P3}) smaller than the first duration (T_{P1}).

14. The method (3000) according to claim 13 further comprising the steps of:
determining (S33) whether the transmitter (1000, 2000) is operating in X or Z base,
if it is determined that the transmitter (1000, 2000) is operating in the Z base:
suppressing (S34) one of the second light pulse (P₂) and the third light pulse (P₃) depending on a value of a signal to be transmitted.
if it is determined that the transmitter (1000, 2000) is operating in the X base:
phase modulating (S35) the second light pulse (P₂) and/or the third light pulse (P₃) depending on a value of a signal to be transmitted.

15. The method (3000) according to claim 14 further comprising the step of:
if it is determined that the transmitter (1000, 2000) is operating in the X base:
halving (S35A) the intensity of the second light pulse (P₂) and the third light pulse (P₃).

16. The method (3000) according to claim 14 or 15 further comprising the steps of:
determining (S36) whether a decoy is to be applied,
if it is determined that the decoy is to be applied:
applying (S37) the decoy to the second light pulse (P₂) and/or the third light pulse (P₃) depending on a value of the decoy to be applied, and
transmitting (S38) the second light pulse (P₂) and/or the third light pulse (P₃),
if it is determined that the decoy is not to be applied:
transmitting (S38) the second light pulse (P₂) and/or the third light pulse (P₃).
